## Europäisches Patentamt

## European Patent Office

## Office européen des brevets

(19)

(11) Veröffentlichungsnummer: **0 013 269**
A1

(12) **EUROPÄISCHE PATENTANMELDUNG**

(21) Anmeldenummer: **79890068.4**

(22) Anmeldetag: **19.12.79**

(51) Int. Cl.³: **B 29 C 27/04**
A 43 B 5/04

(30) Priorität: **21.12.78 AT 9153/78**

(43) Veröffentlichungstag der Anmeldung:
**09.07.80** Patentblatt **80/14**

(84) Benannte Vertragsstaaten:
**CH DE FR GB IT SE**

(71) Anmelder: **Koflach Sportgeräte Gesellschaft m.b.H**
**A-8580 Köflach(AT)**

(72) Erfinder: **Neubauer, Franz**
**Flurweg 17**
**A-8580 Köflach(AT)**

(72) Erfinder: **Heizinger, Ferdinand**
**Michael Gruberstrasse 10**
**A-8580 Köflach(AT)**

(74) Vertreter: **Kretschmer, Adolf, Dipl-Ing.**
**Schottengasse 3a**
**A-1014 Wien(AT)**

(54) **Verfahren zur Herstellung eines gepolsterten Schaftes bzw. Schuhuppers und Vorrichtung zur Durchführung dieses Verfahrens.**

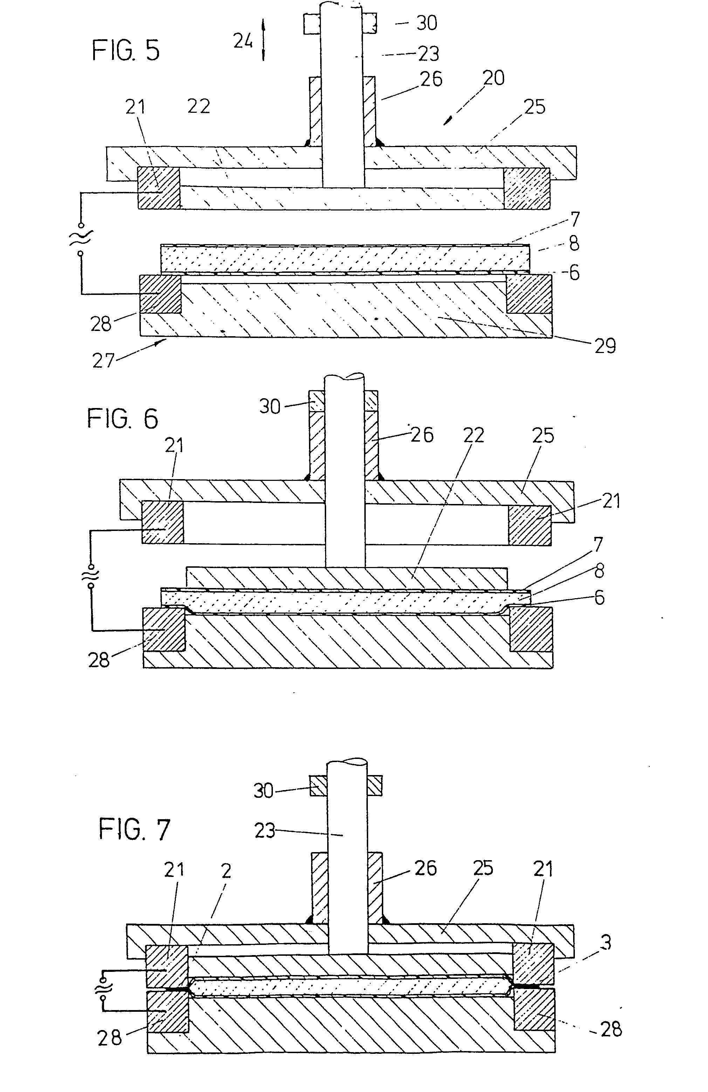

(57) Für die Herstellung eines gepolsterten Schuhoberteils, beispielsweise für Innenschuhe von Skischuhen werden wenigstens drei Schichten übereinander angeordnet, wobei die beiden äußeren Schichten aus mit Hochfrequenz verschweißbaren Kunststoffolien gebildet sind und zwischen diesen beiden Schichten ein polsterndes Material, wie beispielsweise Polyesterwatte, welche in mit Hochfrequenz schweißbarem Kunststoff getränkt ist, angeordnet wird. Dieser mehrlagige Aufbau wird nun unter Flächenpressung gesetzt, worauf die beiden Außenschichten zumindest über ihren Umfang miteinander durch Hochfrequenz verschweißt werden. In besonderen Bereichen, wie beispielsweise den Knöchelbereichen werden die Polstereinlagen durch zusätzliche Schweißnähte in ihrer Lage fixiert. Die Vorrichtung zur Durchführung dieses Verfahrens weist relativ zueinander bewegliche Formhälften (20, 27) auf. Die eine Formhälfte (20) weist darüber hinaus einen Mittelstempel (22) auf, welcher gegenüber den als Elektroden (21) ausgebildeten übrigen Teilen der Formhälfte (20) voreilend antreibbar ist, wodurch die gewünschte Flächenpressung vor der Verschweißung durchgeführt werden kann (Fig. 6).

FIG. 6

Croydon Printing Company Ltd.

EP 0 013 269 A1

- 1 -

Verfahren zur Herstellung eines gepolsterten Schaftes
bzw. Schuhuppers und Vorrichtung zur Durchführung dieses
Verfahrens.

Die Erfindung bezieht sich auf ein Verfahren zur Herstellung
eines gepolsterten Schaftes bzw. Schuhoberteils insbesondere
eines Innenschuhes für Skischuhe aus Kunststoffen, welcher
mit einer Sohle verbunden wird, mit einem aus wenigstens drei
Schichten bestehenden Aufbau sowie auf eine Vorrichtung zur
Durchführung dieses Verfahrens. Zur Herstellung von Innenschuhen von Skischuhen ist es bekannt, Kunststoffe zwischen
zwei miteinander verklebten oder vernähten Folien in situ auszuschäumen. Derartige Verfahren weisen vor allen Dingen den
Nachteil auf, daß unterschiedlichen Polsterungsbedürfnissen
in verschiedenen Teilbereichen des Schaftes nicht genügend
Rechnung getragen werden konnte. Es war zwar möglich, Stellen unterschiedlicher Polsterstärke herzustellen, jedoch haben dickere Polsterwandstärken den Nachteil, daß sie relativ
hart werden, da an diesen Stellen in der Regel weniger Treibmittel und damit weniger polsternde Luftzellen ausgebildet
werden. Das Vernähen der Außen- und der Innenschicht ist ebenso wie das konventionelle Verkleben ein aufwendiger Arbeitsgang. Die üblicherweise als Außen- und Innenwand von Innenschuhen verwendeten Materialien weisen eine hohe Flexibilität, aber nur eine geringe Reißfähigkeit auf. Es besteht
immer die Gefahr, daß die miteinander verbundenen Außen- und
Innenschichten an den Stellen der Nähte oder der Klebung
reißen.

Das zwischen den Außen- und Innenschichten angeordnete Polstermaterial wurde vielfach auch auf die Außen- oder Innenschicht aufgeklebt und in der Folge die Außen- und Innenschicht miteinander verbunden. Die Klebung der Polsterschicht sollte auf diese Weise sicherstellen, daß die Polsterschicht sich nicht innerhalb des zwischen Außen- und Innenschicht gebildeten Hohlraumes verschiebt, und auch dieses Verfahren ist äußerst aufwendig.

Die Erfindung zielt nun darauf ab, ein besonders einfaches und wirtschaftliches Verfahren für die Herstellung des Schaftes bzw. Uppers eines Innenschuhes für Skischuhe zu schaffen und ist zur Lösung dieser Aufgabe im wesentlichen dadurch gekennzeichnet, daß zwischen zwei unter Anwendung von Hochfrequenz schweißbaren Kunststoffolien, insbesondere PVC-Folien, Kunststoffwatte und/oder Schaumstoffe, insbesondere in hochfrequenzschweißbarem Kunststoff getränkte Polyesterwatte angeordnet wird, daß der mehrschichtige Aufbau unter Flächenpressung gesetzt wird und an den zu verschweißenden Stellen des Schaftes bzw. Uppers unter Anwendung eines höheren Preßdruckes und Anwendung von Hochfrequenz verschweißt wird, wobei die Flächenpressung der nicht zu verschweißenden Bereiche vor der Pressung der zu verschweißenden Bereiche durchgeführt wird. Das Ausgangsmaterial kann auf diese Weise einfach durch Übereinanderlegen von wenigstens drei Schichten gebildet werden. Das Polstermaterial wird durch Anlage an einen Teil der Form in seiner Lage gehalten, und es wird durch eine geringfügige Flächenpressung der Vorteil erreicht, daß zum Zusammenpressen derjenigen Bereiche, welche miteinander verschweißt werden sollen, nicht unkontrollierte Mengen Luft in den Hohlräumen eingeschlossen bleiben. Es wird somit eine vorbestimmte Stärke der Polsterschicht durch die Flächenpressung eingehalten, und die Verbindung der Außen- und Innenschichten miteinander erfolgt unter Zwischenschaltung eines weitgehend vollständig komprimierten Teiles des Polstermaterials. Bei Verwendung von Polyesterwatte, welche an sich nicht hochfrequenzschweißbar ist, ist es erforderlich, diese Watte mit einem hochfrequenzschweißbaren Kunststoff zu tränken, und eine im Bereich der zu verschweißenden Stellen vollständig komprimierte Polyesterwatte weist den entscheidenden Vorteil gegenüber bekannten Verfahren auf, daß sie eine Armierung der verschweißten Zonen bildet und damit gleichzeitig mit einer Lagefixierung der Polsterschicht die Reißfähigkeit der verschweißten Bereiche erhöht. Die Flächenpressung kann über verschiedene Bereiche des Schaftes bzw. Uppers verschieden gehalten werden, und es können auf diese Weise unterschiedliche Polsterungseigenschaften in verschiedenen Teilbereichen des Schaftes vorgegeben werden. Dadurch, daß die Flächenpressung der nicht zu verschweißenden Bereiche vor der Pressung der zu verschweißenden Bereiche durchgeführt wird, wird der Einschluß von Luft in den nicht zu verschweißenden Bereichen begrenzt und eine genau vorgegebene Dicke der Polsterschicht mit Sicherheit eingehalten. Im Rahmen des erfindungsgemäßen Verfahrens kann in vorteilhafter Weise so vorgegangen werden, daß Teilbereiche der nicht zu verschweißenden Bereiche, insbesondere die zum Schutz des Knöchels bestimmten Teilbereiche mit Materialien anderer Festigkeitseigenschaften, insbesondere Schaumstoffeinlagen versehen werden, deren Lage durch Schweißnähte fixiert wird. Derartige zusätzliche Polsterungseinlagen brauchen bei dem erfindungsgemäßen Verfahren nicht gesondert verklebt werden, da sie durch Schweißnähte in ihrer Lage gehalten werden können, wobei derartige Schweißnähte in vorteilhafter Weise in sich geschlossen ausgebildet sein können. Auch für diese Schweißnähte gilt, daß sie durch das komprimierte Polsterungsmaterial armiert sind und damit eine höhere Reißfähigkeit aufweisen. Vor allem in den Knöchelpartien können hiebei Schaumgummibeilagen eine höhere Druckbeständigkeit ermöglichen. Die Polyesterwatte bzw. das Polsterungsmaterial wird nur durch die Festlegung im Bereich der Schweißnähte in ihrer Lage gehalten, und eine Verklebung in den Hohlräumen zwischen der Außen- bzw. Innenschicht ist nicht erforderlich. Vorzugsweise wird die Außen- und/oder Innenschicht des wenigstens dreischichtigen Aufbaues von PVC-Schaumfolien gebildet, wobei wenigstens die Außenschicht mit geschlossener Oberfläche ausgebildet wird. Derartige PVC-Schaumfolien sind äußerst flexibel und weisen einen hohen Tragekomfort auf. Die Verwendung dieser Folien wird aber erst durch das Armieren mit Polstermaterial im Bereich der Schweißstellen und das im Bereich dieser Schweißstellen erfolgende Kollabieren der Poren des Außen- oder Innenschichtmaterials möglich, da erst diese Verfahrensschritte den Verbindungsstellen die erforderliche Festigkeit und vor allem die erforderliche Reißfestigkeit verleihen. Die Innenschicht kann selbstverständlich mit einem üblichen Futtermaterial beschichtet sein, lediglich die Außenschicht soll im Interesse der Wasserdichtheit des Innenschuhes eine geschlossene Oberfläche aufweisen.

Die erfindungsgemäße Vorrichtung zur Durchführung dieses Verfahrens weist eine öffenbare Form auf, deren Formhälften zumindest teilweise als Elektroden ausgebildet sind. Erfindungsgemäß ist die Vorrichtung im wesentlichen so ausgebildet, daß der lichte Abstand der nicht als Elektroden ausgebildeten Bereiche der Formhälften voneinander in der Schließstellung derselben der gewünschten Dicke der Polsterung entspricht, während die als Elektroden ausgebildeten Bereiche bei zumindest einer Formhälfte über die nicht als Elektroden ausgebildeten Bereiche in der Schließstellung vorragen. Mit einer derartigen Vorrichtung können die lose übereinander geschichteten Lagen des Aufbaues auf die gewünschte Dicke gepreßt und die zu verschweißenden Stellen in einfacher Weise unter Anwendung von Hochfrequenz miteinander verbunden werden. Die zu verschweißenden Stellen müssen naturgemäß stärker komprimiert werden als diejenigen Bereiche, welche Polsterungseigenschaften aufweisen sollen, und diese stärkere Kompression wird durch die vorragenden als Elektroden ausgebildeten Bereiche der Form sichergestellt. Vorzugsweise ist die Ausbildung der Vorrichtung so getroffen, daß wenigstens eine der Formhälften in .wenigstens einen nicht als Elektrode ausgebildeten Mittelstempel und wenigstens einen als Elektrode ausgebildeten Formteil unterteilt ausgebildet ist. Mit einer solchen Vorrichtung lassen sich ohne weitere Modifikation der Vorrichtung verschiedene Dicken der Polsterschicht vorgeben, und es können in einfacher Weise verschiedene Polsterungseigenschaften in Teilbereichen des Schaftes verwirklicht werden.

In vorteilhafter Weise ist die Schließbewegung des oder der Mittelstempel zur zweiten Formhälfte oder Teilen derselben gesondert von der Schließbewegung der als Elektrode ausgebildeten Formteile steuerbar, wodurch unerwünschte Luftmengen vor dem Verschließen der Form ausgepreßt werden können.

Die gewünschte Polsterschichtstärke kann in einfacher Weise dadurch sichergestellt werden, daß der Mittelstempel wenigstens einer Formhälfte während der Anstellbewegung zur zweiten Formhälfte gegenüber der oder den als Elektrode(n) ausgebildeten Formteilen bis zur Einstellung eines vorbestimmten Hubes oder Preßdruckes voreilend steuerbar ist und daß die Elektroden der beiden Formhälften gegeneinander preßbar sind. Auf diese Weise erfolgt das endgültige Verschließen und damit das Verschweißen an den zu verschweißenden Stellen erst, nachdem die gewünschte Schichtstärke der Polsterschicht eingestellt ist, und eine Ausbildung unerwünschter Luftkammern in den Hohlräumen, welche von den Schweißnähten begrenzt sind, wird mit Sicherheit verhindert.

Die Erfindung wird nachfolgend an Hand von in der Zeichnung dargestellten Ausführungsbeispielen eines Schaftes sowie einer Vorrichtung zur Durchführung des Verfahrens näher erläutert.

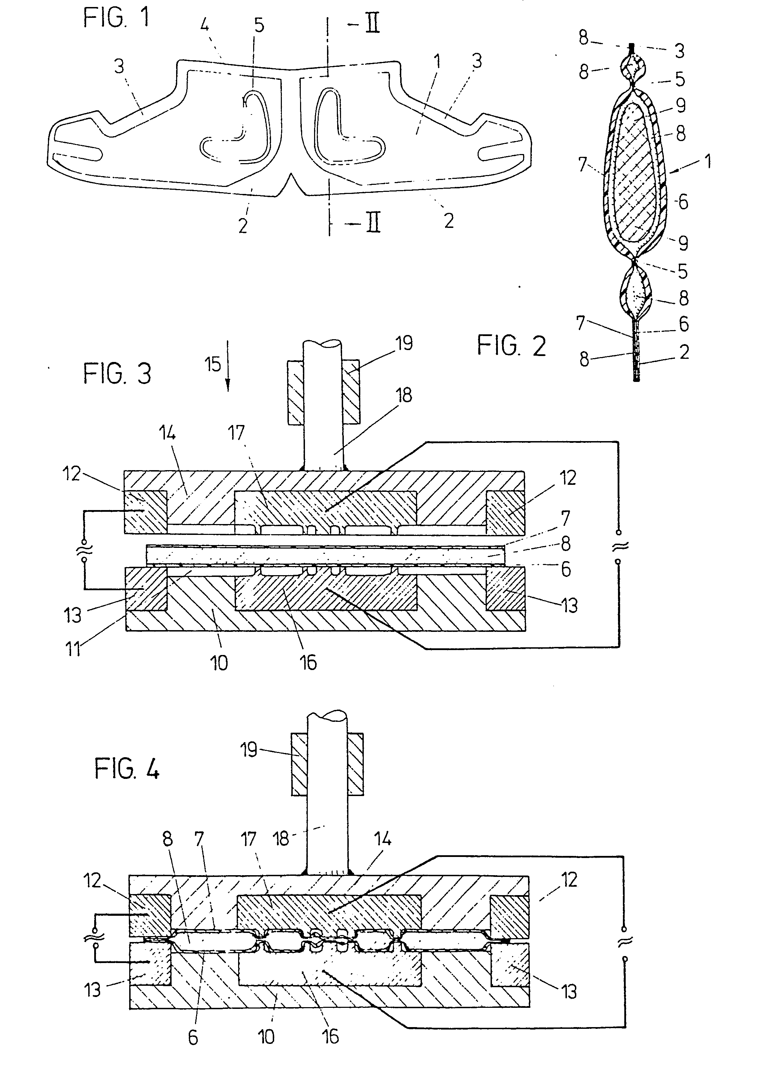

In dieser zeigen Fig. 1 eine Darstellung des erfindungsgemäß hergestellten Schaftes, Fig. 2 einen Schnitt nach der Linie II-II der Fig. 1, Fig. 3 und Fig. 4 einen Schnitt durch eine erste Ausführungsform einer zur Durchführung des Verfahrens geeigneten Vorrichtung, wobei Fig. 3 die Darstellung bei geöffneter Form und Fig. 4 die Darstellung bei geschlossener Form zeigt. Fig. 5, Fig. 6 und Fig. 7 zeigen eine weitere Ausführungsform der erfindungsgemäßen Vorrichtung in aufeinanderfolgenden Arbeitsphasen von der in Fig. 5 dargestellten Offenstellung bis zu der in Fig. 7 dargestellten Schließstellung.

In Fig. 1 ist mit 1 der Schaft eines Innenschuhes für Schischuhe bezeichnet. Der Rand dieses Schaftes ist von rundum verlaufenden Schweißnähten begrenzt, welche im Bereich der anzubringenden Sohle mit 2 und im Bereich des Ristes mit 3 bezeichnet sind. Der Teilbereich 4 des Schaftes, welcher den Knöchel schützen soll, ist von einer in sich geschlossenen Schweißnaht 5 begrenzt. Der Aufbau des Schaftes 1 ist in Fig. 2 näher dargestellt. Mit 6 und 7 sind die die Innen- und Außenseiten des Innenschuhs bildenden PVC-Folien bezeichnet, zwischen welchen eine mit 8 bezeichnete Polsterschicht aus Polyesterwatte, welche mit einem hochfrequenzschweißbaren Kopolymeren getränkt ist, angeordnet ist. Mit 9 sind Schaumstoffeinlagen bezeichnet, welche im Teilbereich 4 des Schaftes 1 die Ausbildung einer unterschiedlichen Druckfestigkeit ermöglichen. Diese Schaumstoffteile sind in Polyesterwatte 8 eingebettet.

Im Bereich der Schweißnähte 2, 3 und 5 ist die Polyesterwatte 8 weitgehend komprimiert und bildet auf diese Weise eine Armierung der miteinander verschweißten Innen- und Außenseite 6 und 7 des mehrschichtigen Aufbaues.

In Fig. 3 und 4 ist eine erste zur Herstellung eines solchen Innenschuhschaftes geeignete Vorrichtung dargestellt. In dieser stellt 10 eine untere Formhälfte für die Auflage des aus den Schichten 6, 7 und 8 bestehenden Ausgangsmaterials dar. Die Formhälfte 10 weist Ausnehmungen 11 für die Aufnahme der Polsterschicht auf. Die Elektroden für die rundumlaufenden Schweißnähte 2 und 3 sind mit 12 und 13 bezeichnet und an eine

Hochfrequenzquelle angeschlossen. Die obere Formhälfte 14 ist als Stempel ausgebildet, wobei ein Niederpressen in Richtung des Pfeiles 15 die in Fig. 4 dargestellte geschlossene Stellung der Form ergibt. In den Fig. 3 und 4 sind im Mittelbereich der beiden Formhälften 10 und 14 weitere Elektroden 16 und 17 dargestellt, welche wiederum mit einer Hochfrequenzquelle verbunden sind. Diese Elektroden ergeben die Ausbildung der Schweißnaht 5 aus Fig. 1, welche Teilebereiche mit anderen Festigkeitseigenschaften begrenzen soll. Die Bezugszeichen der Fig. 3 wurden in Fig. 4 beibehalten. Die Betätigungseinrichtung für die als Stempel ausgebildete obere Formhälfte ist in beiden Figuren als Stange 18 ausgebildet, welche in einer Hülse 19 verschiebbar geführt ist. In beiden Fällen sind die Formhälften 10 und 14 nicht als Elektroden ausgebildet. Lediglich die Teilbereiche 12, 13, 16 und 17 müssen aus elektrisch leitfähigem Material bestehen und stellen Elektroden dar.

In den Fig. 5, 6 und 7 ist eine weitere Ausgestaltung der erfindungsgemäßen Vorrichtung dargestellt. Die Formhälfte 20 weist einen als Elektrode ausgebildeten Bereich 21 auf, der nicht als Elektrode ausgebildete Mittelstempel 22 ist über eine Betätigungsstange 23 in Richtung des Doppelpfeiles 24 verschiebbar. Die als Elektrode ausgebildeten Bereiche 21 sind mit einem zweiten Stempel 25 verbunden und können relativ zur Stellung der Betätigungsstange 23 gesondert verstellt werden. Die Betätigungsstange 23 ist in einer mit dem Stempel 25 verschweißbaren Hülse 26 geführt. Das Ausgangsmaterial weist wiederum die Außenschichten 6 und 7 und eine aus Polyesterwatte bestehende Polsterschicht 8 auf und liegt auf der unteren Formhälfte 27 auf. Diese untere Formhälfte 27 weist wiederum Elektroden 28 auf, wobei der mittlere Bereich 29 nicht als Elektrode ausgebildet sein muß. In einer ersten Betriebsstellung der Vorrichtung nach Fig. 5, wie sie in Fig. 6 dargestellt ist, kann der Mittelstempel 22 in Anlage an das aus den Schichten 6, 7 und 8 bestehende Ausgangsmaterial gebracht werden, und es kann auf diese Weise Luft aus der Polsterlage 8 seitlich entweichen. In der Folge wird nun, wie in Fig. 7 dargestellt, über die Hülse 26 der Stempel 25 vorgeschoben, wodurch die zu verschweißenden Bereiche entsprechend komprimiert werden, sodaß der Abstand zu den Elektroden 21 und 28 hinreichend klein wird, um die Verschweißung in den Bereichen 2 und 3 des Schaftes 1 zu ermöglichen. Der Übersichtlichkeit halber sind in den Fig. 5, 6 und 7 die zusätzlichen Elektroden für die Herstellung der Schweißnähte 5, welche den Knöchelbereich begrenzen, nicht eingezeichnet. An der Betätigungsstange 23 ist weiters ein Anschlag 30 vorgesehen, welcher ein Voreilen des Stempels 22, welcher nicht als Elektrode ausgebildet sein muß und daher nicht aus elektrisch leitendem Material bestehen muß, gegenüber den Elektroden 21 ermöglicht. Die endgültige Anpressung der Elektroden 21 an die Gegenelektroden 28 erfolgt durch Beaufschlagung der Hülse 26 oder des Stempels 25.

Patentansprüche:

1. Verfahren zur Herstellung eines gepolsterten Schaftes bzw.
Schuhoberteils, insbesondere eines Innenschuhes für Skischuhe aus Kunststoffen, welcher mit einer Sohle verbunden wird, mit einem aus wenigstens drei Schichten bestehenden Aufbau,
dadurch gekennzeichnet,
daß zwischen zwei unter Anwendung von Hochfrequenz schweißbaren Kunststoffolien, insbesondere PVC-Folien, Kunststoffwatte und/oder Schaumstoffe, insbesondere in hochfrequenzschweißbarem Kunststoff getränkte Polyesterwatte angeordnet wird, daß der mehrschichtige Aufbau unter Flächenpressung gesetzt wird und an den zu verschweißenden Stellen
des Schaftes bzw. Uppers unter Anwendung eines höheren
Preßdruckes und Anwendung von Hochfrequenz verschweißt
wird, wobei die Flächenpressung der nicht zu verschweißenden Bereiche vor der Pressung der zu verschweißenden Bereiche durchgeführt wird.

2. Verfahren nach Anspruch 1,
dadurch gekennzeichnet,
daß Teilbereiche der nicht zu verschweißenden Bereiche,
insbesondere die zum Schutz des Knöchels bestimmten Teilbereiche mit Materialien anderer Festigkeitseigenschaften,
insbesondere Schaumstoffeinlagen versehen werden, deren
Lage durch Schweißnähte fixiert wird.

3. Verfahren nach einem der Ansprüche 1 oder 2,
dadurch gekennzeichnet,
daß die Außen- und/oder Innenschicht des wenigstens dreischichtigen Aufbaues von PVC-Schaumfolien gebildet wird,
wobei wenigstens die Außenschicht mit geschlossener Oberfläche ausgebildet wird.

4. Vorrichtung zur Durchführung des Verfahrens nach einem der Ansprüche 1 oder 2, mit einer mehrteiligen Form, deren Formhälften zumindest teilweise als Elektroden ausgebildet sind,

dadurch gekennzeichnet,

daß der lichte Abstand der nicht als Elektroden ausgebildeten Bereiche der Formhälften (10, 14; 20, 27) voneinander in der Schließstellung derselben der gewünschten Dicke der Polsterung (8) entspricht, während die als Elektroden ausgebildeten Bereiche (12, 13; 16, 17; 21, 28) bei zumindest einer Formhälfte (10, 14; 20, 27) über die nicht als Elektroden ausgebildeten Bereiche (22, 29) in der Schließstellung vorragen.

5. Vorrichtung nach Anspruch 4,

dadurch gekennzeichnet,

daß wenigstens eine der Formhälften (20) in wenigstens einen nicht als Elektrode ausgebildeten Mittelstempel (22) und wenigstens einen als Elektrode ausgebildeten Formteil (21) unterteilt ausgebildet ist.

6. Vorrichtung nach Anspruch 5,

dadurch gekennzeichnet,

daß die Schließbewegung des oder der Mittelstempel (22) zur zweiten Formhälfte (27) oder Teilen derselben gesondert von der Schließbewegung der als Elektrode ausgebildeten Formteile (21) steuerbar ist.

7. Vorrichtung nach einem der Ansprüche 4 oder 5,

dadurch gekennzeichnet,

daß der Mittelstempel (22) wenigstens einer Formhälfte (20) während der Anstellbewegung zur zweiten Formhälfte (27) gegenüber der oder den als Elektrode(n) ausgebildeten Formteilen (21) bis zur Einstellung eines vorbestimmten Hubes oder Preßdruckes voreilend steuerbar ist und daß die Elektroden (21, 28) der beiden Formhälften gegeneinander preßbar sind.

FIG. 1

FIG. 2

FIG. 3

FIG. 4

FIG. 5

FIG. 6

FIG. 7

0013269

Europäisches Patentamt

**EUROPÄISCHER RECHERCHENBERICHT**

Nummer der Anmeldung

EP 79 89 0068

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 2 878 153 (HACKLANDER) <br> * Figuren; Spalte 1, Zeilen 55-72 * | 1 |
| | KUNSTSTOFF RUNDSCHAU, Band 13, Heft 8, August 1966, Stuttgart, DE, GUNTER ABELE: "Fehler erkennen und vermeiden", Seiten 437-439 <br> * Bilder 11,12 * | 1 |
| | US - A - 3 244 573 (RAFFAELI) <br> * Figuren; Spalte 4, Zeilen 27-32 * | 1-4 |
| | THE IRON AGE, Band 183, Februar 1959, R.H. ESHELMAN: "Dielectric press "welds" vinyl-covered sandwich panels", Seiten 83-85 <br> * Figuren; Seite 85 * | 1,4 |
| | DE - A - 2 400 861 (GARMONT di C. GARBUIO) <br> * Figuren; Seite 8, Zeile 2 * | |
| | FR - A - 1 244 285 (THE SCHOLL) <br> * Figuren; Zusammenfassung, Punkte 4,5 * | 3,4 |
| | DE - C - 882 052 (H. LINDEMANN) | 2 |

./.

Der vorliegende Recherchenbericht wurde für alle Patentansprüche erstellt.

| Recherchenort | Abschlußdatum der Recherche | Prüfer |
|---|---|---|
| Den Haag | 28-03-1980 | CORDENIER |

## KLASSIFIKATION DER ANMELDUNG (Int.Cl. 3)

B 29 C 27/04
A 43 B 5/04

### RECHERCHIERTE SACHGEBIETE (Int. Cl. 3)

B 29 C
A 43 B

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

EPA form 1503.1    06.78

0013269
Nummer der Anmeldung

EP 19 89 0068

| | Europäisches Patentamt | **EUROPÄISCHER RECHERCHENBERICHT** | | |

| EINSCHLÄGIGE DOKUMENTE | | | KLASSIFIKATION DER ANMELDUNG (Int.Cl. ¹) |
|---|---|---|---|
| Kategorie | Kennzeichnung des Dokuments mit Angabe, soweit erforderlich, der maßgeblichen Teile | betrifft Anspruch | |
| | * Figuren; Seite 2, Zeilen 97-105 * | | |
| | -- | | |
| | GB - A - 1 089 368 (ANGUS) <br> * Figuren; Anspruch 5 * | 3 | |
| | -- | | |
| | FR - A - 1 503 838 (SCIPER) <br> * Figuren; Seite 1, rechte Spalte, Seiten 13-24 * | 5,6 | |
| | -- | | |
| | FR - A - 1 451 499 (GARELLA) <br> * Figuren * | 4 | RECHERCHIERTE SACHGEBIETE (Int Cl. ³) |
| | -- | | |
| A | CH - A - 360 306 (HENKE) <br> * Figuren * | 2 | |
| | -- | | |
| A | FR - A - 1 384 959 (HANSON) <br> * Figuren; Seite 2, linke Spalte, Zeilen 60,61 * | 2 | |
| | -- | | |
| A | DE - C - 1 145 962 (SCHOLL) <br> * Figuren * | 2 | |
| | -- | | |
| A | DE - B - 1 155 231 (THE GENERAL TIRE & RUBBER COMP.) <br> * Figur 5 * | 4 | |
| | ---- | | |

EPA Form 1503.2  06.78